Europäisches Patentamt

European Patent Office

Office européen des brevets

(19)

(11) Veröffentlichungsnummer: **0 016 776**
**B1**

(12) **EUROPÄISCHE PATENTSCHRIFT**

(45) Veröffentlichungstag der Patentschrift:
17.11.82

(51) Int. Cl.³: **B 65 G 47/14**

(21) Anmeldenummer: 79900579.8

(22) Anmeldetag: 13.06.79

(86) Internationale Anmeldenummer:
**PCT/DE 79/00056**

(87) Internationale Veröffentlichungsnummer:
**WO 80/00074 (24.01.80 Gazette 80/2)**

(54) **VORRICHTUNG ZUM ENTWIRREN VON VERHÄNGENDEN TEILEN.**

(30) Priorität: 13.06.78 DE 2826245
28.11.78 DE 2851811

(43) Veröffentlichungstag der Anmeldung:
15.10.80 Patentblatt 80/21

(45) Bekanntmachung des Hinweises auf die Patenterteilung:
17.11.82 Patentblatt 82/46

(84) Benannte Vertragsstaaten:
**FR**

(56) Entgegenhaltungen:
**FR-A-1 096 080**
**GB-A-632 105**
**GB-A-1 079 174**
**US-A-3 042 181**
**US-A-3 116 819**
**US-A-3 966 040**
**US-A-4 078 984**
**Engineering, September 1976, Engineering design council London (GB), Hopper Feeders, p. IV Vibratory in Line Hopper feeder, siehe das ganze Dokument**

(73) Patentinhaber: **KETTNER, Hans, Franzburger Strasse 14a, D-3007 Gehrden (DE)**

(72) Erfinder: **KETTNER, Hans, Franzburger Strasse 14a, D-3007 Gehrden (DE)**
Erfinder: **HÜTTER, Odo, Mendelssohnstrasse 50, D-3000 Hannover (DE)**

(74) Vertreter: **Eikenberg, Kurt-Rudolf et al, Eikenberg, Brümmerstedt und Thömen Schackstrasse 1, D-3000 Hannover 1 (DE)**

## Vorrichtung zum Entwirren von verhängenden Teilen

Die Erfindung betrifft eine Vorrichtung zum Entwirren von verhängenden Teilen mit einer in etwa waagerecht angeordneten Entwirrplatte, auf welche die verhängenden Teile aufgebracht sind, und die mit einer Vibratoreinrichtung gekoppelt ist, welche der Entwirrplatte vertikale Auf- und Abwärtsbewegungen erteilt, deren Frequenz einstellbar ist.

In den verarbeitenden und produzierenden Industriezweigen werden sehr häufig kleine Teile oder Werkstücke in großen Mengen benötigt. Solche Teile können z. B. Drahtbiegeteile, wie Sicherungsringe in C-Form, hakenförmige Teile usw. sein. Bekanntlich neigen diese Teile sehr stark zum Verwirren und schließen sich leicht zu Werkstückzusammenballungen in einem sogenannten Haufwerk zusammen. Man bezeichnet solche Teile daher allgemein als verhängende Teile oder auch als Wirrteile (VDI-Richtlinie 3237; Fertigungsgerechte Werkstückgestaltung im Hinblick auf automatisches Zubringen, Fertigen und Montieren, Blatt 1, Düsseldorf 1967).

Die Vereinzelung solcher Wirrteile ist erfahrungsgemäß mit großen Schwierigkeiten verbunden. Der Versuch, ein einzelnes Teil aus einem Haufwerk zu entnehmen, endet regelmäßig mit der Herausnahme einer ganzen Traube, die mehrere Hundert der meist sehr leichten Teile enthalten kann. Die Traube wird dadurch zusammengehalten, daß die Teile verklemmt, ineinander verhakt oder auch magnetisch sind. Es erfordert von einer Bedienungsperson einen großen Zeitaufwand, die Wirrteile zum Zweck einer Weiterverarbeitung zu vereinzeln.

Durch die Zeitschrift »f + h-fördern und heben 27 (1977), Nr. 10, Fachteil mht«, Seiten 82 – 86, insbesondere Bilder 10 und 11 auf Seite 85, sind bereits automatische Entwirrgeräte zum Vereinzeln von Wirrteilen bekanntgeworden. Bei dem sogenannten »Bürstenaustragbunker« werden die verhängenden Teile in einen kastenähnlichen trichterförmigen Bunker gefüllt. Am Boden des trichterförmigen Bunkers befindet sich eine Auswurföffnung, in die eine zylindrische Drehbürste eingebaut ist. Die Bürste wird durch einen Antrieb in einem einstellbaren Takt um einen bestimmbaren Winkel oszillierend gedreht. Durch die Borsten der Bürste wird das Haufwerk hin- und hergeworfen, entwirrt und durch die Bürste nach unten aus dem Bunker hinausbefördert. Der Entwirrvorgang wird hierbei teils durch den Aufprall auf die Bunkerwand, teils durch die Scherwirkung der Bürste (Auseinanderreißen des Haufenwerks) bewirkt.

Der weiterhin bekannte »Trommelentwirrer« besteht aus einer einseitig geschlossenen Entwirrtrommel, die mit konstanter Drehzahl rotiert und das Haufwerk durch Längsrippen in der Trommel hochfördert und in die Trommelmitte abwirft. Dabei lösen sich einzelne Teile ab, die durch ein an der einen Seite der Trommel vorgesehenes Haltekreuz, welches das Haufwerk am Herausfallen hindert, herausfallen können.

Die bekannten Entwirrgeräte sind jedoch relativ störanfällig und können nicht immer optimal arbeiten. So neigt der »Bürstenaustragbunker« häufig zum Verklemmen. Aus dem gesamten Haufwerk löst sich nämlich oft nur eine kleine Traube von mehreren noch miteinander verwirrten Teilen ab. Wenn diese kleine Traube von den Borsten der zylindrischen Bürste erfaßt wird, um durch die Austrittsöffnung am Boden des Bunkers ausgeworfen zu werden, kann sich die Traube zwischen der Bürste und dem Rand der Austrittsöffnung festsetzen. Das Gerät muß dann abgeschaltet werden, und die Bedienungsperson muß die verklemmte Traube von oben her entfernen. Dies ist sehr umständlich, weil zu diesem Zweck das gesamte obere Haufwerk aus dem Bunker herausgenommen werden muß, um die Austrittsöffnung freizulegen. Die bekannte Vorrichtung ist daher wenig bedienungsfreundlich.

Wenn andererseits die erwähnte kleine Traube doch noch von der Bürste ausgeworfen wird, besteht der Nachteil, daß die Teile nicht vollständig vereinzelt sind. Dies muß dann von Hand nachgeholt werden oder die Traube muß erneut in den Bunker gelegt werden.

Ein weiterer Nachteil ergibt sich auch durch die sogenannte Rückverwirrung. Hierunter versteht man die Tatsache, daß die durch den Aufprall auf die Bunkerwand bereits entwirrten Teile sich wieder rückverwirren. Es hat sich gezeigt, daß die Rückverwirrung bei den bekannten Vorrichtungen relativ groß ist, was sich naturgemäß negativ auf den gesamten Entwirrvorgang auswirkt.

Auch sind die bekannten Entwirrgeräte wenig flexibel, da sie jeweils nur für wenige, ganz bestimmte Arten von zu vereinzelnden Teilen geeignet sind. Dies liegt zum einen an der vorgegebenen Bunkergröße und zum anderen an dem vorgegebenen Bürstenformat. Zum Entwirren von jeweils vielen unterschiedlichen Teilen sind deshalb verschieden große Vorrichtungen erforderlich.

Durch die US-A-3 116 819 ist ferner schon eine Vorrichtung bekanntgeworden, mit der für Lampen bestimmte Glühwendeln unter Verwendung eines Prinzips vereinzelt werden, das man als »Auskämmen« bezeichnen kann. Die bekannte Vorrichtung enthält eine schräggeneigte Rutsche und senkrecht nach oben weisende Zähne, die sich konisch nach oben hin verjüngen. Auf diese Zähne werden die losen Glühwendeln gelegt, und die Rutsche wird derart durch einen Vibrator angetrieben, daß die Rutsche ausschließlich Längsschwingungen ausführt. Die Energie der Längsschwingungen wird vermittels der Zähne auf das lose Haufwerk der Glühwendeln eingebracht, und als Folge davon werden nach dem Prinzip des Auskämmens die einzelnen längsorientierten Glühwendeln nach unten auf die Rutsche fallen, von wo aus sie zu einem am Ende der Rutsche angeordneten Aufnahmebehälter gelangen. Die bekannte Vorrichtung ist ausschließlich zum Vereinzeln von längsorientierten Glühwendeln vorgesehen. Zum Entwirren von verhängenden Teilen ist die bekannte Vorrichtung wegen des verwendeten Prinzips des Auskämmens nicht geeignet. Die eingangs erwähnten Drahtbiegeteile, wie Sicherungsringe in C-Form usw., würden sich nämlich mit den Zähnen verhaken und können dann nicht auf die Rutsche fallen.

Schließlich ist durch die US-A-4 078 994, von der die Erfindung ausgeht, eine Vorrichtung zum Entwirren von verhängenden Teilen bekanntgeworden, welche an ihrem Boden eine Siebplatte besitzt, die man im weitesten Sinne auch als Entwirrplatte bezeichnen kann.

Diese bekannte Vorrichtung bedient sich zum Entwirren von verhängenden Teilen also einer Siebtrennung, wie sie auch auf anderen Gebieten der Technik bereits bekannt ist. Die Siebplatte wird durch mehrere Stäbe gebildet, die im Abstand voneinander parallel angeordnet sind. Die Siebwirkung der vertikalen Auf- und Abwärtsbewegungen ausgesetzten Siebplatte besteht darin, daß Teile unterschiedlicher Größe voneinander getrennt werden. Da schon vereinzelte Teile kleiner sind als diejenigen Teile, die noch mehrere ineinander verhakte Einzelteile aufweisen, können die vereinzelten bzw. entwirrten Teile durch den Siebboden hindurch nach unten fallen.

In der praktischen Anwendung hat sich die bekannte Vorrichtung jedoch in mehrfacher Hinsicht als nachteilig erwiesen. Beim Durchtritt durch das Sieb können die vereinzelten Teile naturgemäß sehr leicht zwischen benachbarten Stäben verklemmen und dort hängenbleiben. Dies hat aber zur Folge, daß die angestrebte Siebwirkung insgesamt beeinträchtigt wird, denn wenn mehrere Teile verklemmt sind, verringert sich die zur Verfügung stehende Siebfläche. Außerdem ist zu beachten, daß sich die zwischen den Stäben eingeklemmten Teile während der Rüttelbewegung, welcher die Siebplatte ausgesetzt ist, sehr leicht wieder mit anderen gerade vereinzelten Teilen verhaken können. Somit tritt dann gerade das Gegenteil dessen ein, was ursprünglich angestrebt worden ist.

Als nachteilig ist auch anzusehen, daß durch den Siebboden auch mehrere noch ineinander verhakte Teile durchfallen können, wenn diese so hintereinander verhakt sind, daß sie eine Kette bilden, die durch die Sieböffnung paßt.

Ein anderer gravierende Nachteil der bekannten Vorrichtung besteht darin, daß die Einsatzmöglichkeiten sowie die Variationsmöglichkeiten zur Anpassung an unterschiedliche Größen der zu vereinzelnden Teile sehr stark eingegrenzt bzw. nur sehr umständlich zu verwirklichen sind. Wegen der fest vorgegebenen Abstände der parallel zueinander angeordneten Stäbe lassen sich nämlich bei einer vorgegebenen Siebplatte nur Teile einer ganz bestimmten Größe und Form entwirren. Wenn der Wunsch besteht, anders gestaltete Teile anderer Form und Größe zu vereinzeln, ist es erforderlich, eine andere an diese Teile entsprechend angepaßte neue Siebplatte einzubauen, denn unterschiedlich große Teile erfordern zum Vereinzeln nach dem Prinzip der Siebtrennung auch unterschiedliche Siebgrößen.

Der Erfindung liegt die Aufgabe zugrunde, unter Vermeidung der geschilderten Nachteile der bekanntgewordenen Anordnungen eine Vorrichtung zum Entwirren von verhängenden Teilen zu schaffen, die verklemmsicher und rückverwirrungsarm ist und sich durch eine nur geringe Störanfälligkeit auszeichnet. Ferner soll die Vorrichtung einfach im Aufbau sein und dennoch eine große Flexibilität hinsichtlich der Einsatzmöglichkeiten bzw. der Variationsmöglichkeiten zur Anpassung an unterschiedliche Arten von zu entwirrenden Werkstücken oder Teilen besitzen.

Die Lösung dieser Aufgabe erfolgt bei der eingangs vorausgesetzten Vorrichtung dadurch, daß die Entwirrplatte als eine Platte ohne Durchbrechungen ausgebildet ist und daß die Entwirrplatte in der Weise mit der Vibratoreinrichtung gekoppelt ist, daß neben der Frequenz auch die Amplitude der Auf- und Abwärtsbewegungen der Entwirrplatte veränderbar ist.

Die Erfindung beschreitet zur Entwirrung von verhängenden Teilen einen neuartigen Weg, der von der bekannten Verwendung eines Siebbodens wegführt und der statt dessen eine vollfächige Platte ohne Durchbrechungen vorsieht. Die Entwirrplatte ist dabei auf solche Weise mit der Vibratoreinrichtung gekoppelt, daß neben der Frequenz auch die Amplitude der Auf- und Abwärtsbewegungen der Entwirrplatte veränderbar ist.

Das Vereinzeln und Entwirren der ineinander verhakten Teile erfolgt bei der Erfindung also nicht durch eine Siebwirkung; vielmehr wird ein »Hub-Prall-Effekt« ausgenutzt, was eine Abkehr von dem bekannten Prinzip der Sieb-Trennung bedeutet.

Die Anwendungsbreite der erfindungsgemäßen Vorrichtung ist praktisch unbegrenzt. Als besonders vorteilhaft ist hervorzuheben, daß sich bei einer vorgegebenen Entwirrplatte ein breites Teilespektrum bearbeiten läßt, ohne daß die Amplitude und die Frequenz verändert werden müßte. Nur wenn Teile entwirrt werden sollen, die sich in Größe und Gewicht um ein Vielfaches von den vorherigen Teilen unterscheiden, sind Anpassungsmaßnahmen erforderlich, die darin bestehen, daß in einfacher Weise lediglich die Frequenz und die Amplitude der vertikalen Auf- und Abwärtsbewegungen variiert werden. Gleichwohl ist die erfindungsgemäße Vorrichtung einfach im Aufbau und deshalb auch sehr störungssicher und bedienungsfreundlich. Auch ist die neuartige Vorrichtung weitgehend rückverwirrungsfrei.

Die durch die Auf- und Abwärtsbewegungen der Entwirrplatte bewirkte Stoßzahl des Haufwerks ist gedämpfter als die Stoßzahl der gelösten Teile. Somit wandern die gelösten Teile von der Entwirrplatte leicht ab, während das Haufwerk darauf verbleibt. Versuche haben ergeben, daß die Vorrichtung praktisch keine Rückverwirrung mehr aufweist, insbesondere dann, wenn gemäß einer vorteilhaften Weiterbildung der Erfindung auf der Oberfläche der Entwirrplatte eine Mehrzahl von vertikal ausgerichteten Stiften vorgesehen ist.

Die Entwirrplatte kann zweckmäßig eben ausgebildet und in einer leichten Schräglage angeordnet sein, und an die schräg nach unten geneigte Seite der Entwirrplatte kann sich ein Transportsystem anschließen. Durch dieses Transportsystem, z. B. ein Förderband, können die vereinzelten Teile zu ihrem Bestimmungsort gefördert werden.

Es ist weiterhin zweckmäßig, die Entwirrplatte an ihrem Rand in der Weise mit einer nach oben gerichteten Seitenwand zu versehen, daß ein Bereich ohne Seitenwand verbleibt, wobei die entwirrten Teile aus diesem Bereich austreten können.

Eine besonders vorteilhafte Weiterbildung der Erfindung besteht darin, daß seitlich neben der Entwirrplatte ein Bunker als ein Speicherraum zur Aufnahme der verhängenden Teile vorgesehen ist und daß der Bunker auf eine Fördereinrichtung aufgesetzt ist, so daß die verhängenden Teile aus dem Bunker heraus auf die Entwirrplatte gefördert werden können. Dadurch wird eine sogenannte Speicherzone (das ist der Bunker, in dem die zu entwirrenden Teile gespeichert sind) und eine davon getrennte Entwirrzone (der Bereich der Entwirrplatte) geschaffen. Die Aufteilung in Speicherzone und Entwirrzone führt zu einer besonders günstigen Vorrichtung. Bei dem eingangs erwähnten bekannten »Bürstenaustragbunker« drückt die Speicherzone — nämlich der Bunkerinhalt mit dem Haufwerk — auf die empfindliche Entwirrzone, also auf die Bürste. Durch das relativ große Gewicht wird der Entwirrvorgang dabei nachteilig beeinflußt. Auch ist im laufenden Betrieb kein Entstören möglich. Vielmehr muß die Anlage zur Entstörung abgeschaltet und das gesamte Haufwerk entfernt werden, um von oben her eingreifen zu können. Alle diese Nachteile entfallen bei der Erfindung, weil die Speicherzone und die Entwirrzone zwei voneinander getrennte Bereiche darstellen. Dadurch wird eine Unabhängigkeit zwischen der Menge der zu entwirrenden Teile und dem Ausbringen der vereinzelten Teile erreicht. Die in der Speicherzone gelagerte Menge der zu entwirrenden Teile ist ohne Einfluß auf den Entwirrvorgang, so daß sich ein quasistationärer Entwirrprozeß einstellt. Darüber hinaus wird eine besonders bedienungsfreundliche und zugängliche Vorrichtung geschaffen.

Bei einer anderen vorteilhaften Weiterbildung ist vorgesehen, daß die Entwirrplatte als flexible Platte nach Art einer biegbaren Membran ausgebildet ist. Die Membran wird von unten her von einem Schlagwerk beaufschlagt und führt somit Auf- und Abwärtsbewegungen durch. Auch hier können die verhängenden Teile von dem Bunker aus auf die Membran gefördert werden.

In der Praxis ist oft die Vereinzelung der Wirrteile allein nicht ausreichend, und es besteht der Wunsch, daß die Teile nacheinander in bestimmter Liefermenge und -geschwindigkeit an einer Verarbeitungsstelle zur Verfügung stehen. Zu diesem speziellen Zweck ist es schon bekanntgeworden (Buch »Verkettungseinrichtungen in der Fertigungstechnik«, Carl Hanser Verlag München, 1971, Seiten 75—76 und 125; sowie Buch »Mechanized Assembly« von G. Boothroyd und A. H. Redford, McGraw-Hill, London, 1968, Seiten 23 und 81), sogenannte Vibrationswendelbunker — auch Vibrationswendelförderer oder Schwingförderer genannt — als Zubringeeinrichtungen einzusetzen. Solche Vibrationswendelförderer bestehen aus einem mit einem Schwingboden versehenen topfförmigen Schwingtopf, an dessen Innenwand sich ein kreisförmiger Förderweg nach Art einer Wendel erstreckt. Die Teile, die nacheinander zur Verfügung stehen sollen, werden auf den Schwingboden gelegt. Durch den Antrieb des Vibrationsförderers werden die zu ordnenden Teile auf dem kreisförmigen Förderweg vom Schwingboden aus bis zum oberen Ende des Topfes zu einem Auslaß gefördert. Die die Wendel am Auslaß nacheinander verlassenden Teile können nun entweder der Verarbeitungsstätte zugeführt oder auch magaziniert werden.

Durch das erwähnte Buch »Verkettungseinrichtungen . . .«, S. 76, ist es auch bei Schwingförderern, die allerdings nicht zum Entwirren, sondern zum Fördern dienen, bekannt, bei dem verwendeten zwangsläufigen Antrieb neben der Frequenz auch die Amplitude der dem Schwingförderer erteilten Bewegung zu ändern.

In die voranstehend erwähnten, an sich vorteilhaften Vibrationswendelförderer können allerdings nur solche Teile eingebracht werden, die aufgrund ihrer Geometrie entweder nicht zum Verwirren neigen oder die bereits zuvor durch eine separate Entwirrvorrichtung vereinzelt worden sind. Es ist also nicht möglich, ein Haufwerk von verhängenden Teilen in den Vibrationswendelförderer einzubringen, um die Teile in einer Reihenfolge am Ende der Wendel entnehmen zu können. Nur in Ausnahmefällen bei sehr leicht zu vereinzelnden Teilen wird durch die Schwingbewegung des Vibrationswendelförderers eine Entwirrung der Teile erreicht.

Eine besonders zweckmäßige Ausgestaltung der Erfindung sieht deshalb vor, daß die Entwirrplatte am unteren Ende des Schwingtopfes eines Vibrationswendelförderers angeordnet ist und den inneren Teil des Schwingbodens des Vibrationswendelförderers bildet und daß der Schwingantrieb des Vibrationswendelförderers und die Vibratoreinrichtung schwingungstechnisch voneinander getrennt sind, so daß die Entwirrplatte und der Schwingtopf voneinander unabhängige Bewegungen ausführen.

Es handelt sich also um eine Kombination der Vorrichtung zum Entwirren mit einem Vibrationswendelförderer. Dabei wird der innere Teil des Schwingbodens des Vibrationswendelförderers praktisch durch die Entwirrplatte ersetzt, von der die entwirrten Teile auf den verbleibenden Bodenteil des Schwingtopfes fallen, von wo aus sie auf der Wendel nach oben gefördert werden. Damit keine störende gegenseitige Beeinflussung der beiderseitigen Antriebe auftritt, sind der Schwingantrieb des Vibrationswendelförderers und die Vibratoreinrichtung der Entwirrplatte schwingungstechnisch voneinander getrennt, so daß die Entwirrplatte und der Schwingtopf voneinander unabhängige Bewegungen ausführen können. Es wird also eine neuartige Vorrichtung geschaffen, die es gestattet, in einem Haufwerk verhängende Teile zu entwirren und in einer kontinuierlichen Reihenfolge zu magazinieren bzw. einer Verarbeitungsstätte zuzuführen.

In einer zweckmäßigen Ausgestaltung der Erfindung untergreift die den Wendelanfang der Wendel des Vibrationswendelförderers bildende Aufnahmefläche den äußeren Rand der Entwirrplatte, so daß die entwirrten Teile mit Sicherheit auf die Aufnahmefläche herunterfallen. Weiterhin ist vorgesehen, daß der äußere Rand der Entwirrplatte an der Stelle, an der die von der Aufnahmefläche aufsteigende Wendel sich etwa in gleicher Höhe mit dem äußeren Rand befindet, mit einer Seitenwand versehen ist, wodurch die Teile daran gehindert werden, von der Entwirrplatte auf die ansteigende Wendel zu fallen. Damit die Wendelbahn an der Innenwand des Schwingtopfes ungestört verlaufen kann, ist in vorteilhafter Weiterbildung der Erfindung die Entwirrplatte an derjenigen Stelle, an der die Wendel die Entwirrplatte »passiert«, mit einer entsprechenden Ausnehmung versehen, so daß die Entwirrplatte sich frei bewegen kann und die Wendel nicht berührt.

Es ist in der Praxis oft wünschenswert, daß die einzelnen Teile nicht nur in einer kontinuierlichen Reihenfolge, sondern zusätzlich auch noch in einer bestimmten Ausrichtung bzw. Orientierung und Lage zum Magazinieren oder an der Verarbeitungsstätte zur Verfügung stehen. Zu diesem Zweck ist es durch den schon erwähnten Stand der Technik bekannt, den Förderweg, also die Wendel des Vibrationswendelförderers, mit sogenannten Orientierungshilfen oder »Schikanen« zu versehen. Durch die Orientierungshilfen wird erreicht, daß die Teile die Wendel am oberen Ende des Schwingtopfes nur verlassen können, wenn sie in einer bestimmten definierten Orientierung vorliegen. Solche Teile, welche die bestimmte Orientierung nicht aufweisen, werden durch die Orientierungshilfen zwangsläufig von der Wendel »heruntergestoßen«. Bei der Verwendung von Wendeln, die mit solchen Orientierungshilfen versehen sind, sind gemäß einer vorteilhaften Weiterbildung Rückführungsmittel vorgesehen, durch die erreicht wird, daß die von den Ordnungshilfen von der Wendel heruntergestoßenen Teile nicht auf einen unteren Wendelgang, sondern auf die Entwirrplatte gelangen.

Eine zweckmäßige Ausgestaltung der Erfindung sieht vor, daß der Schwingtopf des Vibrationswendelförderers derart sich nach oben verjüngend ausgebildet ist, daß die von den Ordnungshilfen von der Wendel heruntergestoßenen Teile in gewünschter Weise auf die Entwirrplatte fallen. Bei einer anderen vorteilhaften Weiterbildung der Erfindung ist oberhalb der Entwirrplatte ein Rückführungstrichter mit schräg nach unten verlaufender Wandung und einer Trichteröffnung vorgesehen, wobei der Rückführungstrichter an der unteren Seite des die Ordnungshilfe enthaltenden obersten Wendelganges befestigt ist und sich bis unterhalb dieser Wendel erstreckt. Dadurch ist gewährleistet, daß die von den Ordnungshilfen von der Wendel heruntergestoßenen Teile über den Rückführungstrichter auf die Entwirrplatte geleitet werden.

Nachfolgend wird die Erfindung anhand der in der Zeichnung dargestellten Ausführungsbeispiele näher erläutert. Es zeigt

Fig. 1 als Seitenansicht eine Prinzip-Darstellung einer erfindungsgemäßen Vorrichtung,

Fig. 2 die vereinfachte Seitenansicht einer anderen Ausführungsform,

Fig. 3 die perspektivische Darstellung einer mit Stiften und Seitenwänden versehenen Entwirrplatte (auch als »Nagelbrettentwirrer« bezeichnet),

Fig. 4 die vereinfachte Darstellung einer anderen Ausführungsform der Erfindung,

Fig. 5 eine Weiterbildung der Erfindung, bei der die Entwirrplatte nach Art einer biegbaren Membran ausgebildet ist,

Fig. 6 einen Bunker für die Ausführungsformen gemäß Fig. 4 oder Fig. 5,

Fig. 7 die perspektivische Darstellung eines bekannten Vibrationswendelförderers,

Fig. 8 die vereinfachte Querschnittsansicht einer Ausführungsform der Erfindung, wobei zum Zweck einer besseren Übersichtlichkeit die Schnittlinien der Wendel nicht vollständig dargestellt sind,

Fig. 9 die vereinfachte Querschnittsansicht einer anderen Ausführungsform der Erfindung, wobei zum Zweck einer besseren Übersichtlichkeit ebenfalls die Wendel nicht vollständig mit allen Schnittlinien dargestellt ist, und

Fig. 10 die perspektivische Darstellung einer bekannten, mit Ordnungshilfen versehenen Wendel.

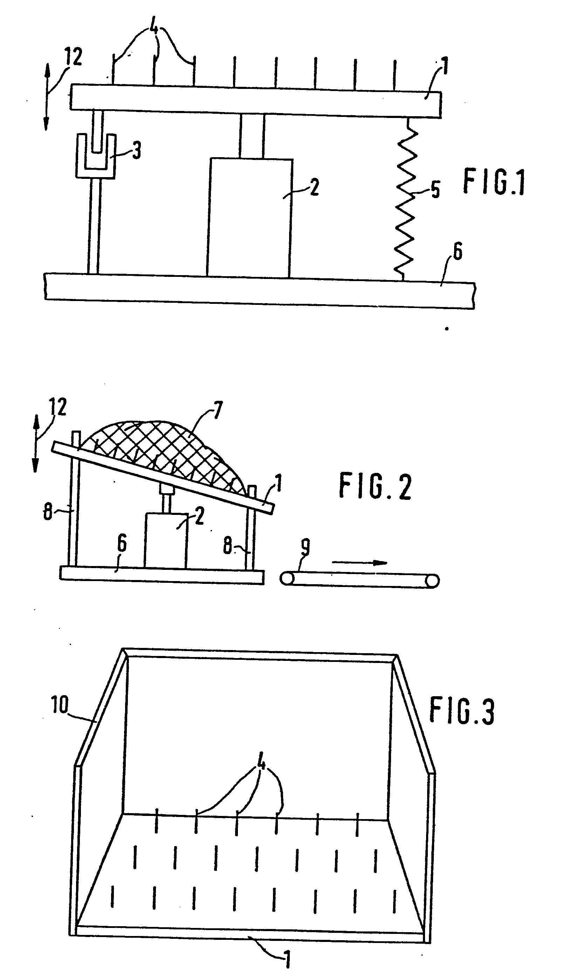

In Fig. 1 ist in Seitenansicht eine Entwirrplatte 1 gezeigt, die beispielsweise eine rechteckige Oberfläche aufweist. Die Entwirrplatte 1 wird durch einen Kolbenvibrator 2 pneumatisch angetrieben. Der Kolbenvibrator 2 ist auf einer Grundplatte 6 befestigt. Zwischen der Grundplatte 6 und der Entwirrplatte 1 befinden sich eine Feder 5 und eine Führung 3. Der Kolbenvibrator 2 treibt die Entwirrplatte 1 in der Weise an, daß sie Auf- und Abwärtsbewegungen in Richtung des Pfeils 12 ausführt. Durch die Feder 5 werden diese Bewegungen abwechselnd gehemmt bzw. unterstützt, so daß die Entwirrplatte vorzugsweise harmonische Vertikalschwingungen ausführt. Das auf der Entwirrplatte 1 befindliche Haufwerk 7 (das aus Übersichtlichkeitsgründen in Fig. 1 nicht dargestellt ist, vgl. aber Fig. 2) wird einem ständigen Hub/Prall-Vorgang ausgesetzt, der zur Ablösung von einzelnen Teilen aus dem Haufwerk führt. Die gelösten Teile sind einer höheren Stoßzahl als das Haufwerk ausgesetzt und fallen von der Entwirrplatte 1 herunter.

Wie in Fig. 1 weiter dargestellt ist, können auf die Entwirrplatte 1 vertikal ausgerichtete Stifte oder Nägel 4 angebracht werden. Die Nägel 4 auf der Entwirrplatte 1 verhindern die horizontale Bewegung des gespeicherten Haufwerks. Vereinzelte Teile können leicht zwischen den Stiften durchgefördert werden. Rund um das Haltestiftfeld ist genügend Raum vorhanden, der den Vereinzelungsprozeß der Teile nach allen Richtungen hin begünstigt.

Durch Druckvariationen im pneumatischen Antrieb kann das Entwirrverfahren an Teile oder Werkstücke unterschiedlicher Verhakneigung angeglichen werden. Daher beeinflussen die Werkstückgröße und die Werkstückmasse das Entwirrverhalten der Vorrichtung nur unwesentlich. Durch die offene Bauweise sind Störungen ziemlich unwahrscheinlich und leicht zu beheben. Durch Anbringen einer geeigneten Steuerung, z. B. einen in der Zeichnung nicht dargestellten Fußschalter, kann die Vorrichtung als Handhabungshilfe Werkstücke oder Teile entwirrt z. B. an einem Montageplatz anbieten.

Bei der in Fig. 2 gezeigten Vorrichtung ist die Entwirrplatte 1 in schräger Lage angeordnet und mit Führungsstangen 8 versehen. An die schräg nach unten geneigte Seite der Entwirrplatte 1 schließt sich ein Fördersystem 9, z. B. ein einfaches Förderband, an. Auch hier sind auf der schräg angeordneten Entwirrplatte Stifte 4 angeordnet, so daß ein Haufwerk aus Wirrteilen am Hinuntergleiten gehindert wird. Der pneumatische Kolbenvibrator 2 bewirkt wiederum vertikale Auf- und Abwärtsbewegungen in Richtung des Pfeils 12 der Entwirrplatte 1, wobei die mit entsprechenden Öffnungen versehene Entwirrplatte 1 mittels der Führungsstangen 8 geführt ist. Durch die Aufeinanderfolge von Vertikalbeschleunigung (Abheben des Haufwerks von der Entwirrplatte 1) und Aufprall (Zurückfallen auf die Entwirrplatte 1) wird das Haufwerk 7 aufgelöst. Das Haufwerk 7 wird bis zur vollständigen Auflösung durch die Stifte 4 in seiner Position gehalten. Vereinzelte Werkstücke können zwischen den Stiften 4 aus der Entwirrzone herausgleiten. Das Herausgleiten wird durch die leichte Schrägstellung der Entwirrplatte 1 begünstigt, die beim Vertikalhub eine Förderkomponente in Austrittsrichtung erzeugt. Die vereinzelten Teile fallen auf das Förderband 9, durch welches sie zu einem Montageplatz gefördert werden können.

Wenn die Entwirrplatte 1 — wie in Fig. 1 gezeigt — waagerecht angeordnet ist, ist es vorteilhaft, oberhalb der Entwirrplatte 1 einen Luftstrom zu erzeugen. Dadurch wird das Herunterfallen der schon vereinzelten Teile begünstigt.

Die in Fig. 1 gezeigte mindestens eine Feder 5 kann auch beidseitig, also oberhalb und unterhalb der Entwirrplatte 1 angeordnet sein.

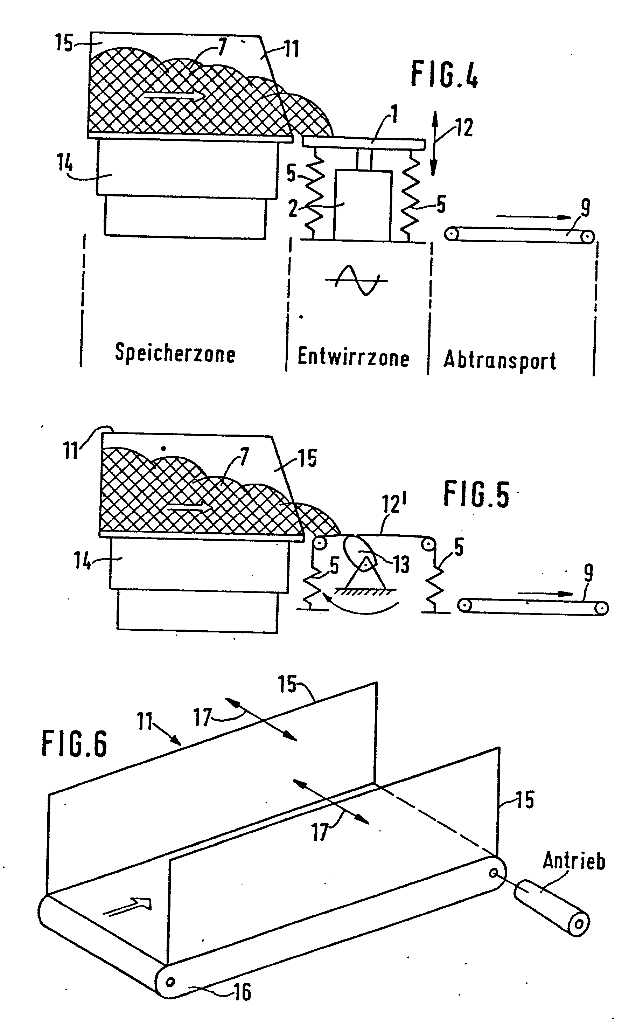

In Fig. 3 ist die Anordnung von Stiften bzw. Nägeln 4 auf der Entwirrplatte 1 besonders gut zu erkennen. Die mit einer solchen Entwirrplatte 1 versehene Vorrichtung wird nachfolgend als Nagelbrettentwirrer bezeichnet. Der pneumatische Kolbenvibrator 2 ist der Einfachheit halber in Fig. 3 nicht mit dargestellt. Um eine definierte Austrittszone für die vereinzelten Teile zu erzeugen, ist die Entwirrplatte 1 an den Kanten mit Ausnahme einer Kante mit einer Seitenwand 10 versehen.

In Fig. 4 ist neben der Entwirrplatte 1 ein Bunker 11 vorgesehen, der mit Ausnahme seiner der Entwirrplatte 1 benachbarten Seite allseitig durch eine Seitenwand 15 abgeschlossen, aber nach oben offen ist. Der Bunker 11 bildet somit einen Speicherraum für das Haufwerk 7. Der Bunker 11 ist auf einem Linearförderer 14 aufgesetzt, so daß das in seiner Geometrie festgelegte Haufwerk 7 taktweise aus dem Bunker 11 auf die Entwirrplatte vorgeschoben wird. Die Entwirrplatte ist während des Ablaufs in Betrieb. Durch den Linearförderer 14 wird pro Takt eine etwa gleichbleibende Werkstückmenge in den Entwirrprozeß eingebracht. Es liegt somit ein annähernd stationärer Entwirrprozeß vor. Die in Fig. 4 gezeigte Vorrichtung verfügt somit über eine definierte Entwirrzone. Der Bunkerinhalt wird zum Entwirren nicht mitbewegt, es wird nur ein kleiner Abschnitt des Haufwerks mit den Entwirrbewegungen beaufschlagt. Dabei ist es durch eine entsprechende Steuerung des Linearförderers 14 möglich, eine definierte Werkstückmenge in die Entwirrzone vorzuschieben. Das gleiche Arbeitsergebnis läßt sich auch mit einem Bunker 11 erzielen, bei dem als Fördereinrichtung ein in seiner Geschwindigkeit und in seinem Fördertakt steuerbares Förderband 16 verwendet wird. Dabei ist es von besonderem Vorteil, daß die Haufwerksform durch verstellbare (vgl. Pfeile 17) Seitenwände 15 des Bunkers 11 beeinflußt werden kann, um eine gewünschte Werkstückmenge pro Zeiteinheit auf die Entwirrplatte 1 zu fördern. Hierbei sind die Seitenwände 15 senkrecht angeordnet und quer zur Förderrichtung verschiebbar. Das Förderband bildet den Boden des Bunkers, wie dies in Fig. 6 zu erkennen ist.

Ebenso wie in den Fig. 1 und 2 wird auch in Fig. 4 die Entwirrplatte 1 durch einen pneumatischen Kolbenvibrator 2 in Zusammenwirkung mit den Federn 5 angetrieben. Durch die dargestellte Sinusschwingung soll angedeutet werden, daß die Entwirrplatte 1 harmonische Vertikalschwingungen in Richtung des Pfeils 12 ausführt. Die Entwirrplatte 1 kann mit zwei parallel zur Zeichenebene verlaufenden Seitenwänden versehen werden (nicht dargestellt), so daß ein definierter Austrittsbereich für die entwirrten Teile entsteht. Die entwirrten Teile fallen auf ein Transportsystem 9, von wo aus sie zu einem Montageplatz befördert werden können.

Durch die Ausführungsform gemäß Fig. 4 werden zwei definierte voneinander getrennte Bereiche, nämlich die Speicherzone und die Entwirrzone, geschaffen. Durch diese Aufteilung ergeben sich mehrere Vorteile. So ist die Ausbringung (Anzahl der vereinzelten Teile pro Zeiteinheit) unabhängig vom Bunkerinhalt. Im Gegensatz zu den bisher bekannten Vorrichtungen ist die Entwirrzone genau definiert, und die Ausbringung ist steuerbar. Alle vereinzelten Werkstücke können abgeführt werden, und eine Rückverwirrung ist praktisch ausgeschlossen. Weiterhin werden die Werkstücke bzw. die verhängenden Teile nur in der Entwirrzone mit Bewegungsenergie beaufschlagt, womit sich schädliche mechanische Verformungen der Teile verhindern lassen. Schließlich ergibt sich noch der Vorteil, daß die Speichermenge relativ ungebrenzt ist, während bei den bekannten Vorrichtungen nur eine begrenzte Menge an Werkstücken speicherbar ist, da wegen der dort nicht vollzogenen Trennung in Speicherzone und Entwirrzone alle Werkstücke gleichzeitig bewegt werden müssen. Bei der Erfindung hingegen wird nur ein definierter Teilbereich des Haufwerks bewegt, während das Resthaufwerk in Ruhe bleibt.

Die obenerwähnten Funktionsbereiche bzw. Wirkzonen lassen sich wie folgt definieren. Speicherzone: Bereich, in dem eine Werkstückmenge bereitgehalten wird, die direkt die Nachfüllzeit bestimmt. Die Speicherzone erfüllt außerdem die Funktion, das Haufwerk in die Entwirrzone zu transportieren. Entwirrzone: Bereich, in welchem dem verhakten Haufwerk Bewegungsenergie zugeführt wird, so daß Zufallsbewegungen im Haufwerk entstehen, die die Ablösung einzelner Werkstücke ermöglichen. In Fig. 4 ist zur Erzeugung der Bewegungsenergie der pneumatische Kolbenvibrator 2 vorgesehen. Es können jedoch auch magnetische, hydraulische oder sonstige andere Kräfte in Zusammenwirkung mit dem Erdfeld (Gravitationskraft) in das Haufwerk 7 eingebracht werden. Die Vertikalschwingung der Entwirrplatte 1 kann z. B. Beschleunigungen bis zu 4 g ins Haufwerk 7 einbringen.

Die in Fig. 4 erreichte Aufteilung in Speicherzone, Entwirrzone und gegebenenfalls auch noch Abtransport-Zone führt zu einer Vorrichtung nach Art eines Baukastenprinzips oder Modulsystems. Die einzelnen Zonen lassen sich nämlich sehr leicht an unterschiedliche Arten von verhängenden Teilen anpassen. Bei relativ großen Teilen können ein entsprechend größerer Bunker 11 und eine entsprechend größere Entwirrplatte 1 vorgesehen werden. Wenn es sich umgekehrt bei den verhängenden Teilen um relativ kleine Teile handelt, können Bunker 11 und Entwirrplatte 1 durch entsprechend kleinere Typen ausgetauscht werden. Gegenüber den bekannten Vorrichtungen wird somit eine sehr große Flexibilität bezüglich der zu vereinzelnden Werkstücke oder Teile erreicht. Eine weitere Anpassung an die Arten der zu vereinzelnden Teile kann durch Regelung des Vertikalhubs der Vertikalschwingungen in Richtung des Pfeils 12 und auch durch die Frequenz der Vertikalbewegung erfolgen. Schließlich läßt sich auch noch der Takt des Vorschubs (Förderdauer/Förderpause) des Linearförderers 14 für den Bunker 11 einstellen.

Die in Fig. 5 dargestellte Ausführungsform unterscheidet sich von der in Fig. 4 dadurch, daß die Entwirrplatte nach Art einer biegbaren Membran 12' ausgebildet ist. Diese Membran wird von ihrer Unterseite her mit einem Schlagwerk 13 beaufschlagt, so daß ebenfalls vertikale Auf- und Abwärtsbewegungen der Membran 12' entstehen. Wie bereits zuvor beschrieben, werden die Teile des Haufwerks 7 durch diese Auf- und Abwärtsbewegungen vereinzelt und von einem Transportsystem 9 weiterbefördert. Die beiden Federn 5 sorgen dafür, daß die Membran 12' in ihrer Ruhelage stramm gespannt ist. Im übrigen sind die Vorrichtungen in Fig. 4 und 5 gleich ausgestaltet, insbesondere ist also auch in Fig. 5 eine Aufteilung in eine Speicherzone und Entwirrzone vorgesehen. Die obenerwähnten Vorteile treffen also auch auf die Vorrichtung gemäß Fig. 5 zu.

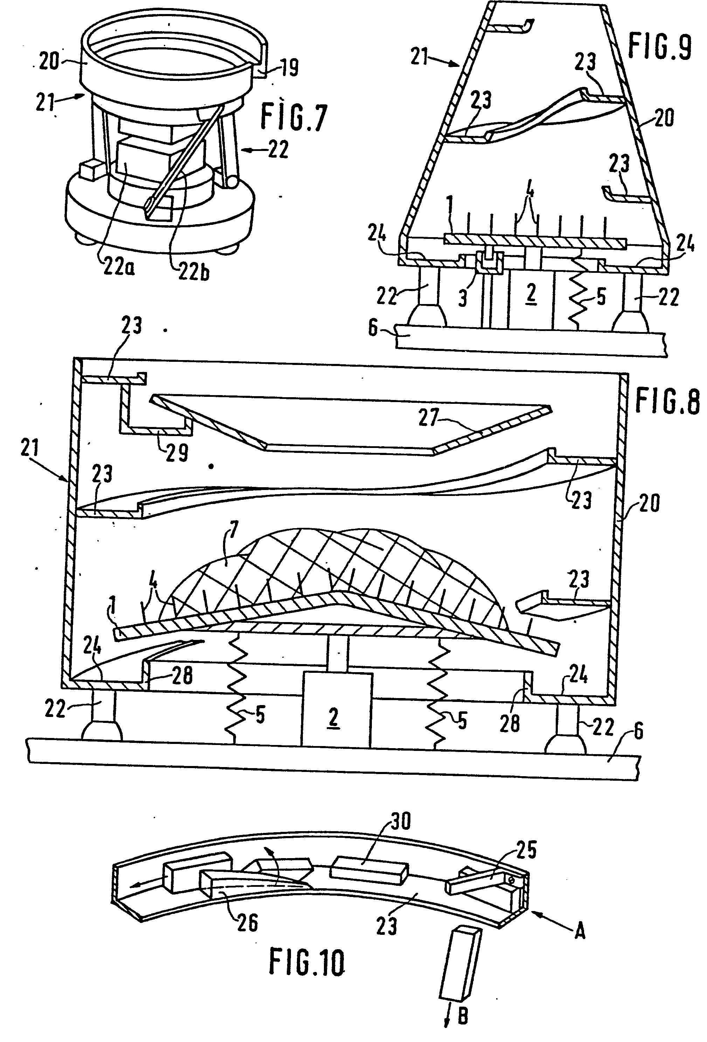

In Fig. 7 ist ein bekannter Vibrationswendelförderer 21 gezeigt, dessen Schwingtopf 20 von einem Schwingantrieb 22 angetrieben wird. Der Schwingantrieb 22 besteht hier aus einem Elektromagneten 22a und Federelementen 22b. Infolge der Wirkung des Schwingantriebs 22 werden auf den Schwingtopfboden des Schwingtopfes 20 gebrachte Teile zur Innenwand des Schwingtopfes 20 hin bewegt und von dort aus in bekannter Weise längs eines durch eine ansteigende Wendel 23 gebildeten Förderweges zum oberen Ende des Schwingtopfes zu einem Auslaß 19 gefördert. Dabei stehen die betreffenden Teile am Auslaß 19 in einer aufeinanderfolgenden kontinuierlichen Reihenfolge zur Verfügung, wie dies in den oben zum Stand der Technik genannten Büchern näher beschrieben ist.

Die erfindungsgemäße Vorrichtung macht sich die an sich bekannten Vorteile eines Vibrationswendelförderers zunutze und schafft die Möglichkeit, diese Vorteile auch bei in einem Haufwerk verhängenden Teilen zur Geltung kommen zu lassen. In der in Fig. 8 gezeigten Querschnittsansicht einer Ausführungsform der Erfindung ist zu erkennen, daß der innere Bodenteil des Schwingbodens eines Vibrationswendelförderers 21 praktisch durch die Entwirrplatte 1 ersetzt ist. Durch den Kolbenvibrator 2 wird die Entwirrplatte 1 in der Weise erregt, daß sie vertikale Auf- und Abwärtsbewegungen durchführt, ohne dabei mit dem Schwingtopf 20 bzw. der Wendel 23 des Schwingtopfes 20 in Berührung zu kommen. Dabei wird durch die zwischen der Entwirrplatte 1 und der Grundplatte 6 vorgesehenen Federn 5 erreicht, daß annähernd harmonische Schwingungen ausgeführt werden. Wie zuvor schon beschrieben ist, werden als Folge dieser vertikalen Schwingungen die in dem Haufwerk 7 zusammenhängenden verwirrten Teile entwirrt, und diese entwirrten Teile fallen von der Entwirrplatte 1 herunter.

Die entwirrten Teile gelangen von der etwas oberhalb des ursprünglichen Schwingtopfbodens angeordneten Entwirrplatte 1 auf eine Aufnahmefläche 24, die als ein Teil des Schwingtopfbodens verblieben ist und an der zur Schwingtopfmitte hin gelegenen Seite durch Begrenzungen 28 abgegrenzt ist. Von dieser Aufnahmefläche 24 aus erstreckt sich die ansteigende Wendel 23 bis zum oberen Ende des Schwingtopfes 20, und längs dieser Wendel 23 werden die mittels der Entwirrplatte 1 entwirrten Teile infolge der Wirkung des Schwingantriebes 22 des Vibrationswendelförderers 21 gefördert. Der Schwingantrieb 22 ist dabei von dem Kolbenvibrator 2 getrennt. Durch diese schwingungstechnische Trennung der beiden Antriebssysteme wird erreicht, daß sich die unterschiedlichen Bewegungen der Entwirrplatte 1 und des Schwingtopfes 20 gegenseitig nicht störend beeinflussen.

Die Entwirrplatte 1 ist in vorteilhafter Weise dachförmig mit ihrer höchsten Erhebung in der Schwingtopfmitte ausgebildet, wodurch die Vereinzelung der im Haufwerk 7 befindlichen Teile begünstigt wird. Um nun den ungestörten Verlauf der ansteigenden Wendel 23 längs der Innenwand des Schwingtopfes 20 zu ermöglichen, ist die Entwirrplatte 1 an derjenigen Stelle, an der sie sich in etwa gleicher Höhe mit der ansteigenden Wendel 23 befindet, mit einer entsprechenden Aussparung versehen (nicht dargestellt), die dem Verlauf der Wendel 23 in etwa angepaßt ist. Außerdem ist an der genannten Stelle des äußeren Randes der Entwirrplatte 1 in zweckmäßiger Weise eine sich senkrecht nach oben erstreckende Seitenwand (ebenfalls nicht dargestellt) an der Entwirrplatte 1 vorgesehen, durch die verhindert wird, daß an dieser Stelle vereinzelte Teile von der Entwirrplatte 1 auf die Wendel 23 fallen.

Wie bereits erwähnt, besteht in vielen Fällen der Wunsch, die am Auslaß 19 des Vibrationswendelförderers 21 zur Verfügung stehenden einzelnen Teile in einer definierten Orientierung zu entnehmen. Zu diesem Zweck werden auf der Wendel 23 an sich bekannte Orientierungshilfen 25, 26 (vgl. Fig. 10) angebracht, die bewirken, daß solche Teile, welche die Orientierungshilfen 25, 26 nicht in einer vorgegebenen Lage erreichen, von der Wendel heruntergestoßen werden. Um zu erreichen, daß diese heruntergestoßenen Teile auf die Entwirrplatte 1 gelangen, ist in Fig. 8 unterhalb der mit den Orientierungshilfen versehenen Wendelbahn ein Rückführungstrichter 27 vorgesehen, der über eine Halterung 29 an der Wendel 23 befestigt ist. Der Rückführungstrichter 27 besitzt eine oberhalb der Entwirrplatte 1 gelegene Trichteröffnung, durch welche die von der Wendel 23 heruntergestoßenen Teile auf die Entwirrplatte 1 gelangen und somit nicht auf unterhalb des Rückführungstrichters 27 verlaufende Wendelbahnen fallen können.

Um eine Rückführung in diesem Sinne zu erreichen, ist der Schwingtopf 20 in dem in Fig. 9 dargestellten Ausführungsbeispiel konisch ausgebildet, so daß die von einem oberen Wendelgang infolge von Ordnungshilfen heruntergestoßenen Teile nicht auf darunter gelegene Wendelbahnen, sondern auf die Entwirrplatte 1 fallen. Die obere Öffnung des Schwingtopfes 20 ist dabei so gewählt, daß die in dem Haufwerk 7 befindlichen verhängenden Teile ohne Schwierigkeiten auf die Entwirrplatte 1 aufgebracht werden können, welche auf ihrer Oberfläche verteilt mit sich senkrecht erstreckenden Nägeln 4 zur Unterstützung des Entwirrvorganges versehen sein kann. Abweichend von der in Fig. 8 gezeigten Ausführungsform ist in Fig. 9 in Verbindung mit dem Kolbenvibrator 2 nur eine Feder 5 und eine die senkrechte Auf- und Abwärtsbewegung gewährleistende Führung 3 vorgesehen. Im übrigen ist es zweckmäßig, sowohl den Kolbenvibrator 2 für die Entwirrplatte 1 als auch den Schwingantrieb 22 für den Schwingtopf auf einer gemeinsamen Grundplatte 6 anzuordnen.

Bei der erfindungsgemäßen Vorrichtung ist noch die Breite der Aufnahmefläche 24 von Bedeutung, auf die die entwirrten Teile von der Entwirrplatte 1 gelangen. Wenn die Breite zu gering ist und viele relativ große, leicht verhängende Teile auf die Auflagefläche 24 fallen, besteht die Gefahr, daß sich diese bereits vereinzelten Teile, die den Bewegungen des Schwingtopfes 20 ausgesetzt sind, wieder verwirren, daß also eine nicht erwünschte Rückverwirrung stattfindet. Eine solche Rückverwirrung ist insbesondere auch dann zu erwarten, wenn mehr Teile von der Entwirrplatte 1 auf die Aufnahmefläche 24 fallen, als von dort aus längs der Wendel zum oberen Ende des Schwingtopfes 20 gefördert werden. Daher ist in vorteilhafter Weise vorgesehen, daß die durch die Innenwandung des Schwingtopfes 20 und die Begrenzung 28 bestimmte Breite der Aufnahmefläche 24 in Abhängigkeit der zu entwirrenden Teile veränderbar ist.

In Fig. 10 ist die Wirkung von an sich bekannten Ordnungshilfen 25 und 26 veranschaulicht. In dem dargestellten Beispiel werden quaderförmige Teile 30 längs der Wendelbahn 23 gefördert. Diese quaderförmigen Teile 30 sollen so geordnet werden, daß sie auf ihrer Längsseite liegend entnommen werden können. Die längs des Förderweges zuerst angeordnete Orientierungshilfe 25 bewirkt, daß nur solche Teile 30 die Orientierungshilfe 25 in Richtung des Pfeils A passieren können, die nicht aufrechtstehen. Die aufrechtstehenden Teile werden nämlich — wie durch den Pfeil B angedeutet ist — von der Wendel 23 heruntergestoßen. Schließlich wird durch die im Anschluß an die Orientierungshilfe 25 folgende weitere Orientierungshilfe 26 bewirkt, daß solche Teile 30, die sich noch nicht in einer aufrechten Lage auf ihrer Längsseite befinden, zwangsläufig in diese gewünschte Lage aufgerichtet werden. Das gezeigte Beispiel soll nur das Prinzip der Ordnungshilfen verdeutlichen. Es ist selbstverständlich, daß diese entsprechend der geometrischen Form der Teile und entsprechend der gewünschten Orientierung vielfältig ausgestaltet sein können. Entscheidend ist, daß bei der erfindungsgemäßen Vorrichtung solche Teile, die infolge der Wirkung der Orientierungshilfen von der Wendel 23 heruntergestoßen werden, wieder auf die Entwirrplatte 1 gelangen, die praktisch den Schwingboden des Schwingtopfes 20 eines Vibrationswendelförderers 21 bildet.

## Patentansprüche

1. Vorrichtung zum Entwirren von verhängenden Teilen, mit einer in etwa waagerecht angeordneten Entwirrplatte (1), auf welche die verhängenden Teile (7) aufgebracht sind, und die mit einer Vibratoreinrichtung (2) gekoppelt ist, welche der Entwirrplatte (1) vertikale Auf- und Abwärtsbewegungen erteilt, deren Frequenz einstellbar ist, dadurch gekennzeichnet, daß die Entwirrplatte (1) als eine Platte ohne Durchbrechungen ausgebildet ist, und daß die Entwirrplatte (1) in der Weise mit der Vibratoreinrichtung (2) gekoppelt ist, daß neben der Frequenz auch die Amplitude der Auf- und Abwärtsbewegungen der Entwirrplatte (1) veränderbar ist.

2. Vorrichtung nach Anspruch 1, dadurch gekennzeichnet, daß auf der Oberfläche der Entwirrplatte (1), auf welcher sich die verhängenden Teile (7) befinden, eine Mehrzahl von vertikal ausgerichteten Stiften (4) vorgesehen ist.

3. Vorrichtung nach Anspruch 2, dadurch gekennzeichnet, daß die Entwirrplatte (1) eben ausgebildet und in einer leichten Schräglage angeordnet ist, und daß sich an die schräg nach unten geneigte Entwirrplatte ein Transportsystem (9) anschließt.

4. Vorrichtung nach einem der vorhergehenden Ansprüche, dadurch gekennzeichnet, daß Führungen (8) vorgesehen sind, durch welche die Entwirrplatte (1) auf ihre Vertikalbewegung beschränkt ist.

5. Vorrichtung nach einem der vorhergehenden Ansprüche, dadurch gekennzeichnet, daß die Vibratoreinrichtung ein Kolbenvibrator (2) ist, welcher der Entwirrplatte (1) harmonische Vertikalschwingungen erteilt, und daß der Kolbenvibrator (2) pneumatisch angetrieben ist.

6. Vorrichtung nach Anspruch 1, 2, 4 oder 5, dadurch gekennzeichnet, daß die Entwirrplatte (1) in ihrem mittleren Bereich einen Punkt höchster Erhebung aufweist und von diesem Punkt aus zu ihrem Rand hin schräg abfällt.

7. Vorrichtung nach einem der vorhergehenden Ansprüche, dadurch gekennzeichnet, daß die Entwirrplatte (1) an ihrem Rand mit einer nach oben gerichteten Seitenwand (10) in der Weise versehen ist, daß eine Aussparung für den Austritt der entwirrten Teile aus dem durch die Entwirrplatte (1) und die Seitenwand (10) gebildeten Raum besteht.

8. Vorrichtung nach einem der vorhergehenden Ansprüche, dadurch gekennzeichnet, daß zwischen der unteren Seite der Entwirrplatte (1) und einer Grundplatte (6), auf der der Kolbenvibrator (2) und die Führungen (8) befestigt sind, mindestens eine die Vertikalbewegung der Entwirrplatte (1) abwechselnd hemmende und unterstützende Feder (5) angeordnet ist.

9. Vorrichtung nach einem der vorhergehenden Ansprüche, dadurch gekennzeichnet, daß seitlich neben der Entwirrplatte (1) ein von dieser gesteuerter Bunker (11) als Speicherraum zur Aufnahme der verhängenden Teile (7) vorgesehen ist, und daß dem Bunker (11) eine Fördereinrichtung (14) zugeordnet ist, die die verhängenden Teile (7) aus dem Bunker (11) heraus auf die Entwirrplatte (1) fördert.

10. Vorrichtung nach Anspruch 9, dadurch gekennzeichnet, daß sich an der dem Bunker (11) gegenüberliegenden Seite der Entwirrplatte (81) das Transportsystem (9) anschließt, auf das die entwirrten Teile fallen.

11. Vorrichtung nach Anspruch 9 und 10, dadurch gekennzeichnet, daß die Fördereinrichtung ein Linearförderer (14) ist.

12. Vorrichtung nach Anspruch 11, dadurch gekennzeichnet, daß verschieden große Bunker (11) auf die Fördereinrichtung (14) aufsetzbar sind.

13. Vorrichtung nach einem der vorhergehenden Ansprüche, dadurch gekennzeichnet, daß die Entwirrplatte (1) als flexible Platte nach Art einer biegsamen Membran (12') ausgebildet ist, die von unten her von einem Schlagwerk (13) beaufschlagt ist.

14. Vorrichtung nach Anspruch 13, dadurch gekennzeichnet, daß die Membran (12') durch zwei Federn (5) stramm in waagerechter Lage gespannt ist.

15. Vorrichtung nach einem der vorhergehenden Ansprüche, dadurch gekennzeichnet, daß so angeordnete Luftdüsen vorgesehen sind, daß ein gerichteter Luftstrom über der Entwirrplatte (1) entsteht, wodurch eine Förderrichtung für die vereinzelten Teile entsteht.

16. Vorrichtung nach Anspruch 9, dadurch gekennzeichnet, daß die Fördereinrichtung ein in seiner Geschwindigkeit und seinem Fördertakt steuerbares Förderband (16) ist.

17. Vorrichtung nach Anspruch 1, dadurch gekennzeichnet, daß die Entwirrplatte (1) am unteren Ende des Schwingtopfes (20) eines Vibrationswendelförderers (21) angeordnet ist und den inneren Teil des Schwingbodens des Vibrationswendelförderers (21) bildet, und daß der Schwingantrieb (22) des Vibrationswendelförderers (21) und die Vibratoreinrichtung (2, 3, 5) schwingungstechnisch voneinander getrennt sind, so daß die Entwirrplatte (1) und der Schwingtopf (20) voneinander unabhängige Bewegungen ausführen.

18. Vorrichtung nach Anspruch 17, dadurch gekennzeichnet, daß die den Wendelanfang der Wendel (23) des Vibrationswendelförderers (21) bildende Aufnahmefläche (24) des verbliebenen Schwingbodenteils den äußeren Rand der Entwirrplatte allseitig untergreift, daß die Entwirrplatte (1) an der Stelle ihres äußeren Randes, an der die ansteigende Wendel (23) sich in gleicher Höhe mit dem äußeren Rand befindet, mit einer Seitenwand versehen ist, so daß die Teile von der Entwirrplatte (1) nicht auf die ansteigende Wendel (23) fallen, und daß die Entwirrplatte (1) an der genannten Stelle so ausgebildet ist, daß der Verlauf der Wendel (23) nicht gestört ist.

19. Vorrichtung nach Anspruch 17 oder 18, dadurch gekennzeichnet, daß die Wendel (23) mit Ordnungshilfen (25, 26) versehen ist, und daß Rückführungsmittel (27) zur Rückführung der von den Ordnungshilfen (25, 26) von der Wendel (23) heruntergestoßenen Teile auf die Entwirrplatte (1) vorgesehen sind.

20. Vorrichtung nach Anspruch 19, dadurch gekennzeichnet, daß der Schwingtopf (20) derart sich nach oben verjüngend ausgebildet ist, daß von den Ordnungshilfen (25, 26) von der Wendel heruntergestoßene Teile auf die Entwirrplatte (1) fallen.

21. Vorrichtung nach Anspruch 19, dadurch gekennzeichnet, daß oberhalb der Entwirrplatte (1) ein Rückführungstrichter (27) mit schräg nach unten verlaufender Wandung und einer Trichteröffnung über der Entwirrplatte (1) vorgesehen ist, und daß der Rückführungstrichter (27) sich bis unterhalb des obersten Wendelgangs erstreckt, so daß von den Ordnungshilfen von der Wendel (23) heruntergestoßene Teile über den Rückführungstrichter (27) auf die Entwirrplatte (1) geleitet werden.

22. Vorrichtung nach einem der vorhergehenden Ansprüche 17–21, dadurch gekennzeichnet, daß die Entwirrplatte (1) dachförmig mit ihrer größten Erhebung in der Schwingtopfmitte ausgebildet ist.

23. Vorrichtung nach einem der vorhergehenden Ansprüche 17–22, dadurch gekennzeichnet, daß die Entwirrplatte (1) auf ihrer Oberfläche mit senkrecht zur Entwirrplatte (1) angeordneten Stiften (4) versehen ist.

24. Vorrichtung nach einem der vorhergehenden Ansprüche 17–23, dadurch gekennzeichnet, daß die Aufnahmefläche (24) zur Schwingtopfmitte hin mit einer Begrenzung (28) versehen ist, und daß die Breite der Aufnahmefläche (24) zur Anpassung an verschiedenartige verhängende Teile veränderbar ist.

## Claims

1. Device for disentangling tangled together parts, comprising an approximately horizontally disposed disentangling plate (1), onto which the tangled together parts (7) are brought, and which is coupled with a vibratory apparatus (2) which imparts to the disentangling plate (1) vertical upward and downward movements, the frequency of which is adjustable, characterized in that the disentangling plate (1) is constructed as a plate without perforations and that the disentangling plate (1) is coupled with the vibratory apparatus (2) in such a manner that not only the frequency but also the amplitude of the upward and downward movements of the disentangling plate (1) can be varied.

2. Device according to claim 1, characterized in that a plurality of vertically oriented pins (4) is provided on the surface of the disentangling plate (1) on which the tangled together parts (7) are situated.

3. Device according to claim 2, characterized in that the disentangling plate (1) is flat in form and is disposed in a slightly inclined position, and that a conveying system (9) adjoins the obliquely downwardly inclined disentangling plate.

4. Device according to one of the preceding claims, characterized in that guides (8) are provided, by which the disentangling plate (1) is limited to its vertical movement.

5. Device according to one of the preceding claims, characterized in that the vibratory apparatus is a piston vibrator (2), which imparts harmonic vertical vibrations to the disentangling plate (1), and that the piston vibrator (2) is pneumatically driven.

6. Device according to claims 1, 2, 4 or 5, characterized in that the disentangling plate (1) possesses in its central region a point of highest projection and slopes downwards towards its edge from this point.

7. Device according to one of the preceding claims, characterized in that the disentangling plate (1) is equipped at its edge with an upwardly oriented side wall (10), in such a way that an opening exists for the discharge of the disentangled parts out of the space formed by the disentangling plate (1) and the side wall (10).

8. Device according to one of the preceding claims, characterized in that, between the lower face of the disentangling plate (1) and a base plate (6) to which the piston vibrator (2) and the guides (8) are attached, at least one spring (5) which alternately inhibits and promotes the vertical movement of the disentangling plate (1) is disposed.

9. Device according to one of the preceding claims, characterized in that, laterally adjacent to disentangling plate (1), a bunker (11) controlled by same is provided as storage space for receiving the tangled together parts (7), and that a conveyor apparatus (14) is associated with the bunker (11), which conveys the tangled together parts (7) out of the bunker (11) onto the disentangling plate (1).

10. Device according to claim 9, characterized in that the conveying system (9) onto which the disentangled parts fall adjoins the side of the disentangling plate (1) opposite to the bunker (11).

11. Device according to claims 9 and 10, characterized in that the conveyor apparatus is a linear conveyor (14).

12. Device according to claim 11, characterized in that bunkers (11) of different sizes can be placed upon the conveyor apparatus (14).

13. Device according to one of the preceding claims, characterized in that the disentangling plate (1) is constructed as a flexible plate in the manner of a flexible membrane (12'), which is subjected from below to the action of a beater mechanism (13).

14. Device according to claim 13, characterized in that the membrane (12') is stressed tightly in a horizontal position by two springs (5).

15. Device according to one of the preceding claims, characterized in that air nozzles are provided, so arranged that an oriented air stream over the disentangling plate (1) is produced, resulting in a conveying direction for the singled-out parts.

16. Device according to claim 9, characterized in that the conveyor apparatus is a conveyor belt (16) controllable in its speed and its conveying cycle.

17. Device according to claim 1, characterized in that the disentangling plate (1) is disposed at the lower end of the vibrating pot (20) of a vibrating helical conveyor (21) and constitutes the inner part of the vibrating base of the vibrating helical conveyor (21), and that the vibratory drive (22) of the vibrating helical conveyor (21) and the vibratory apparatus (2, 3, 5) are so separated from each other in respect of vibrations that the disentangling plate (1) and the vibrating pot (20) execute mutually independent movements.

18. Device according to claim 17, characterized in that the receiving surface (24) of the remaining part of the vibrating base which constitutes the start of the helix (23) of the vibrating helical conveyor (21) penetrates all around beneath the outer edge of the disentangling plate, that the disentangling plate (1) is furnished, at the position of its outer edge at which the ascending helix (23) is at the same level as the outer edge, with a side wall, so that the parts do not fall from the disentangling plate (1) onto the ascending helix (23), and that the disentangling plate (1) is so formed at the aforementioned position that the course of the helix (23) is not affected.

19. Device according to claims 17 or 18, characterized in that the helix (23) is furnished with orientation aids (25, 26) and that recycling means (27) are provided for recycling the parts thrown downwards off the helix (23) by the orientation aids (25, 26) onto the disentangling plate (1).

20. Device according to claim 19, characterized in that the vibrating pot (20) is formed tapering upwards in such a manner that parts thrown downwards off the helix by the orientation aids (25, 26) fall onto the disentangling plate (1).

21. Device according to claim 19, characterized in that a recycling funnel (27) with obliquely downwardly extending wall and a funnel opening above the disentangling plate (1) is provided above the disentangling plate (1), and that the recycling funnel (27) extends to beneath the uppermost turn of the helix, so that parts thrown downwards off the helix (23) by the orientation aids are conducted by the recycling funnel (27) onto the disentangling plate (1).

22. Device according to one of the preceding claims 17 to 21, characterized in that the disentangling plate (1) is roof-shaped with its greatest projection at the centre of the vibrating pot.

23. Device according to one of the preceding claims 17 to 22, characterized in that the disentangling plate (1) is furnished on its upper surface with pins (4) disposed perpendicularly to the disentangling plate (1).

24. Device according to one of the preceding claims 17 to 23, characterized in that the receiving surface (24) is furnished with a boundary (28) towards the centre of the vibrating pot, and that the width of the receiving surface (24) can be varied for the purpose of adapting to different types of tangled together parts.

**Revendications**

1. Dispositif pour démêler des pièces ayant tendance à s'accrocher, au moyen d'une plaque de démêlage (1) disposée pratiquement horizontalement, sur laquelle sont déposées les pièces (7) et qui est couplée à un appareil vibrateur (2) qui anime la plaque de démêlage de mouvements ascendants et descendants dont la fréquence est réglable, caractérisé en ce que la plaque de démêlage (1) a la structure d'une plaque sans perforation et en ce qu'elle est couplée avec l'appareil vibrateur (2) de manière qu'outre la fréquence, l'amplitude des mouvements ascendants et descendants de la plaque de démêlage (1) soit réglable.

2. Dispositif suivant la revendication 1, caractérisé en ce que, sur la surface supérieure de la plaque de démêlage (1), sur laquelle se trouve les pièces ayant tendance à s'accrocher, est prévue une pluralité de pointes (4) dressées verticalement.

3. Dispositif suivant la revendication 2, caractérisé en ce que la plaque de démêlage (1) est plate et disposée légèrement obliquement et en ce qu'un système de transport (9) est couplé à la plaque de démêlage oblique, en bas de celle-ci.

4. Dispositif suivant l'une des revendications précédentes, caractérisé en ce que sont prévus des guides (8) qui limitent le mouvement vertical de la plaque de démêlage (1).

5. Dispositif suivant l'une des revendications précédentes, caractérisé en ce que l'appareil vibrateur est un vibrateur à piston (2) qui applique à la plaque de démêlage (1) des oscillations verticales harmoniques et en ce que le vibrateur à piston (2) est actionné pneumatiquement.

6. Dispositif suivant la revendication 1, 2, 4 ou 5, caractérisé en ce que la plaque de démêlage (1) présente dans sa zone centrale un point de plus grande altitude et qu'elle descend obliquement de ce point vers son bord.

7. Dispositif suivant l'une des revendications précédentes, caractérisé en ce que le bord de la plaque de démêlage (1) est pourvu d'une paroi latérale (10) dressée vers le haut de manière à former un évidement pour la sortie des pièces démêlées hors de l'espace formé par la plaque de démêlage (1) et la paroi latérale (10).

8. Dispositif suivant l'une des revendications précédentes, caractérisé en ce qu'entre le bord inférieur de la plaque de démêlage (1) et une plaque de base (6) sur laquelle sont montés le vibrateur à piston (2) et les guides (8), est disposé au moins un ressort (5) freinant et accélérant alternativement le mouvement vertical de la plaque de démêlage (1).

9. Dispositif suivant l'une des revendications précédentes caractérisé en ce que, latéralement près de la plaque de démêlage (1), est prévue une trémie (11) contrôlée par celle-ci et servant d'espace de stockage pour fournir les pièces ayant tendance à s'accrocher (7) et en ce qu'à la trémie (11) est associé un dispositif transporteur (14) qui transporte les pièces ayant tendance à s'accrocher de la trémie sur la plaque de démêlage (1).

10. Dispositif suivant la revendication 9, caractérisé en ce que, de l'autre côté de la trémie (11) par rapport à la plaque de démêlage (1), est couplé le système de transport (9) sur lequel tombent les pièces démêlées.

11. Dispositif suivant la revendication 9 et 10, caractérisé en ce que le dispositif transporteur est un transporteur linéaire (14).

12. Dispositif suivant la revendication 11, caractérisé en ce que de grandes trémies différentes sont installables sur le dispositif transporteur.

13. Dispositif suivant l'une des revendications précédentes, caractérisé en ce que la plaque de démêlage (1) est réalisée sous la forme d'une plaque souple tu type d'une membrane déformable (12') qui est actionnée par dessous par un appareil de percussion (13).

14. Dispositif suivant la revendication 13, caractérisé en ce que la membrane (12') est tendue raide en position horizontale par deux ressorts (5).

15. Dispositif suivant l'une des revendications précédentes, caractérisé en ce que sont prévues des buses d'air disposées de manière à former un courant d'air dirigé sur la plaque de démêlage (1) pour former une direction de transport des pièces séparées.

16. Dispositif suivant la revendication 9, caractérisé en ce que le dispositif transporteur est une bande transporteuse (16) commandable en vitesse et en fréquence de transport.

17. Dispositif suivant la revendication 1, caractérisé en ce que la plaque de démêlage (1) est disposée à l'extrémité inférieure fu pot vibrant (20) d'un transporteur à hélice à vibrations (21) et forme la partie centrale du fond vibrant du transporteur à hélice à vibrations (21) et en ce que les appareils vibrateurs (2, 3, 5) sont séparés les uns des autres sur le plan oscillation de manière que la plaque de démêlage (1) et le pot vibrant (20) aient des mouvements indépendants l'un de l'autre.

18. Dispositif suivant la revendication 17, caractérisé en ce que la surface de réception (24) de la partie restante du fond vibrant formant le début de l'hélice (23) du transporteur à hélice à vibrations (21) est située tout autour sous le bord externe de la plaque de démêlage, en ce que la plaque de démêlage (1) est pourvue d'une paroi là où son bord extérieur se trouve à la même hauteur que l'hélice montante (23), de manière que les pièces ne tombent pas de la plaque de démêlage (1) sur l'hélice montante (23) et en ce que la plaque de démêlage (1) a à cet endroit une forme telle que le parcours de l'hélice (23) ne la perturbe pas.

19. Dispositif suivant la revendication 17 ou 18, caractérisé en ce que l'hélice (23) est pourvue de moyens d'orientation (25, 26) et en ce qu'il est prévu un moyen de renvoi (27) pour renvoyer les pièces balancées de l'hélice (23) sur la plaque de démêlage (1) par les moyens d'orientation (25, 26).

20. Dispositif suivant la revendication 19, caractérisé en ce que le pot vibrant (20) a une forme rétrécie vers le haut de manière que les pièces balancées de l'hélice par les moyens d'orientation (25, 26) tombent sur la plaque de démêlage (1).

21. Dispositif suivant la revendication 19, caractérisé en ce qu'au dessus de la plaque de démêlage (1) est prévu un entonnoir de renvoi (27) dont la paroi est oblique vers le bas et dont l'ouverture se trouve au-dessus de la plaque de démêlage (1) et en ce que l'entonnoir de renvoi (27) est situé jusque sous le bout d'hélice supérieur de manière que les pièces balancées de l'hélice (23) par les moyens d'orientation soient guidées par l'entonnoir de renvoi (27) sur la plaque de démêlage (1).

22. Dispositif suivant l'une des revendications précédentes 17 à 21, caractérisé en ce que la plaque de démêlage (1) à la forme d'un toit avec le point le plus haut au milieu du pot vibrant.

23. Dispositif suivant l'une des revendications précédentes 17 à 22, caractérisé en ce que la face supérieure de la plaque de démêlage (1) est pourvue de pointes (4) dressées perpendiculairement à la plaque de démêlage (1).

24. Dispositif suivant l'une des revendications précédentes 17 à 23, caractérisé en ce que la surface de réception (24) est pourvue vers le milieu du pot vibrant d'un rebord (28) et en ce que la largeur de la surface de réception (24) est modifiable pour pouvoir s'adapter à des pièces différentes ayant tendance à s'accrocher.

FIG.1

FIG.2

FIG.3

0 016 776

**FIG.4**

15  7  11

14

5
2  5

12

1  9

Speicherzone | Entwirrzone | Abtransport

**FIG.5**

11  7  15

14

12'
5  13  5

9

**FIG.6**

15

11  17

15

17

Antrieb

16

17

FIG.7

FIG.9

FIG.8

FIG.10